# EUROPEAN PATENT SPECIFICATION

(11) **EP 3 391 551 B1**
(45) Date of publication and mention of the grant of the patent: **07.06.2023**
(21) Application number: 16834244.2
(22) Date of filing: 18.12.2016
(51) Int. Cl.: H04B 5/00

(54) **NFC ANTENNA SYSTEM AND METHOD OF ALTERATION OF MODULATION DEPTH**
NFC-ANTENNENSYSTEM UND VERFAHREN ZUR ÄNDERUNG DER MODULATIONSTIEFE
SYSTÈME D'ANTENNE NFC ET PROCÉDÉ DE MODIFICATION DE PROFONDEUR DE MODULATION

(30) Priority: 18.12.2015 SK 500872015
(43) Date of publication of application: 24.10.2018
(73) Proprietor: Logomotion, S.R.O., 921 01 Piestany (SK)
(72) Inventor: HUBINÁK, Emil, 921 01 Piestany (SK)
(74) Representative: Porubcan, Róbert
(86) International application number: PCT/IB2016/057754
(87) International publication number: WO 2017/103899

(56) References cited:
- EP-A2- 2 683 090
- US-A1- 2008 238 799

## Description

### Field of technology

The technology concerns an antenna system with at least one pair of solenoid windings which substitute the flat spiral antenna of a transmitter in the NFC platform. The antenna system occupies smaller surface on the carrier, mainly on the PCB, than flat spiral antenna and it allows for simple alteration of modulation depth.

### Prior state of the art

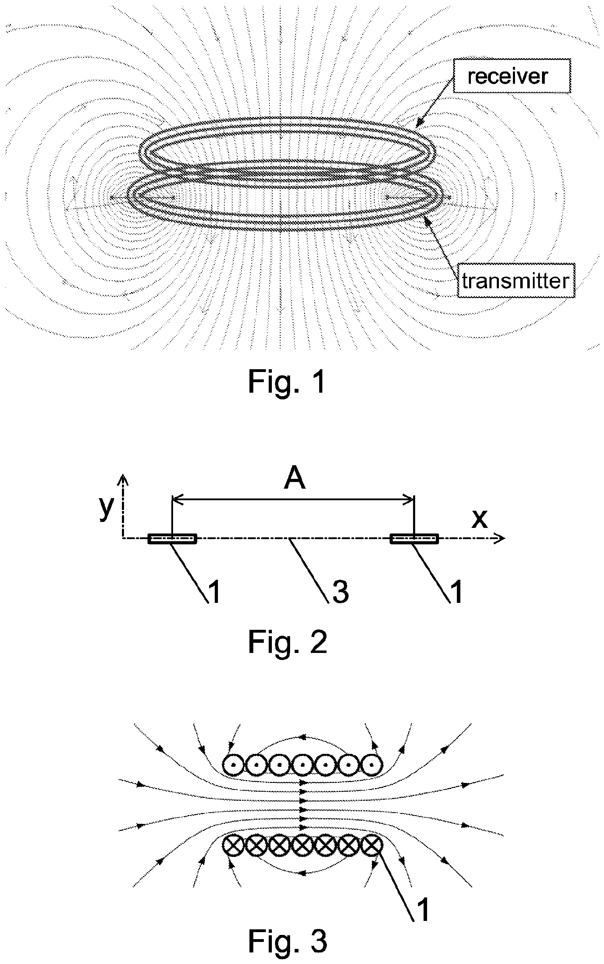

Flat spiral antennas are primarily used for communication by means of NFC platform, mainly according to ISO/IEC 14443. The antenna of the transmitter and the antenna of the receiver are placed in the mutual vicinity, usually in a position just above each other, and they communicate by means of a mutual magnetic inductive coupling. The proximate placement of the antennas creates a core of the air transformer, as depicted on the figure 1. NFC platform operates on the globally available and non-licensed radio ISM frequency in the bandwidth 13,56 MHz. The transfer of the data between the transmitter and the receiver is realized by the change of the intensity of the magnetic field. The change can be 100% (OOK modulation) or 10% (AM). The transfer of the data by means of a change of the intensity of the magnetic field is disclosed in standards ISO 14443 and ISO 18092. The receiving antenna usually has circular shape with the diameter approx. 40 mm, or it has rectangular shape with the width approx. 42 mm and length approx. 72 mm. The transmitting antenna has similar shapes and dimensions as receiving antenna; these shapes and dimensions need not to be exactly identical; however, significant differences lead to less effective flow of the magnetic field.

Flat antennas are simply placed in a free and usually large substrate, such as the plastic carrier of the payment cards. In case of the placement of the flat antenna on the PCB of the electronic device - for example, on mobile phone's PCB - the loop of the flat antenna significantly limits the PCB's design; it therefore limits the placement and connection of the other elements on PCB. Solutions exist according to publications WO/2014/076669, WO/2013/098784, which allow to transmit strong electromagnetic field - capable of affecting the transmitter antenna with a typical surface of the spiral antenna - from a miniature antenna. Such publications disclose a solution with a high level of miniaturization; in case of the placement of the NFC antenna on PCB this problem is not dominant, since PCB usually has sufficiently large total dimensions.

Publication US 2008238799 describes an NFC antenna which includes a ferrite antenna including a primary antenna coil wound on a ferrite core of the ferrite antenna; a loop coil is in a position where components of a magnetic flux on a non-communication direction side interlink, the magnetic flux being generated by the ferrite antenna.

According to the publication EP2683090, a terminal includes a plurality of short-range wireless communication antennas, each antenna placed on different surface or in a vicinity of the different surface of the terminal, and a short-range wireless communication control module configured to control and select at least one of the multiple short-range wireless communication antennas.

Such technical solution of NFC antenna is desired and not known, where the NFC antenna would generate a magnetic field with a similar shape and dimensions as a flat spiral antenna, but which would not need a similarly large surface for its construction, which will offer more freedom for the design of the surrounding connections.

### Essence of the invention

The invention concerns the NFC antenna system pursuant to claim 1 and the method of an alternation of a modulation depth during a transmission by said NFC antenna system pursuant claim 13.

Preferable realizations and embodiments are disclosed in the dependent claims. The abovementioned deficiencies are greatly remedied by the NFC antenna system with at least one pair of solenoid windings, which are placed in a single plane and their longitudinal axis is basically identical, according to this invention which essence lies in the fact that the distance between the middles of the solenoid windings is at least twice its length, and the windings are oriented and connected in such a way that their magnetic fields or mutually opposite. The connection for achievement of the inverse magnetic field will be preferably achieved in such a way that each solenoid winding has its own, independently controlled excitation element, whereby the excitation elements have their modulation inputs interconnected and their frequencies are identical.

The term "solenoid winding" mainly denotes a cylindrical coil with multiple threads of the conductor, where the length of the coil is larger than its diameter, usually it is at least twice its diameter. The solenoid winding in the solution according to this invention can have - but need not to have - a ferrite core; it can have an air core, too. The term "basically identical longitudinal axis" ("longitudinal axis is basically identical") means that exactly coaxial orientation is the most preferable one, but that sufficient results are achieved with slightly deviating mutual position, too.

The distance of the solenoid windings corresponds to the dimensions of the antenna of the receiver, preferably within the margin of error (or limits) set by the length value of the solenoid winding. Solenoid windings should be placed in such a way that at least some magnetic field lines run around the winding of the antenna of the receiver when they cross the plane of the antenna of the receiver.

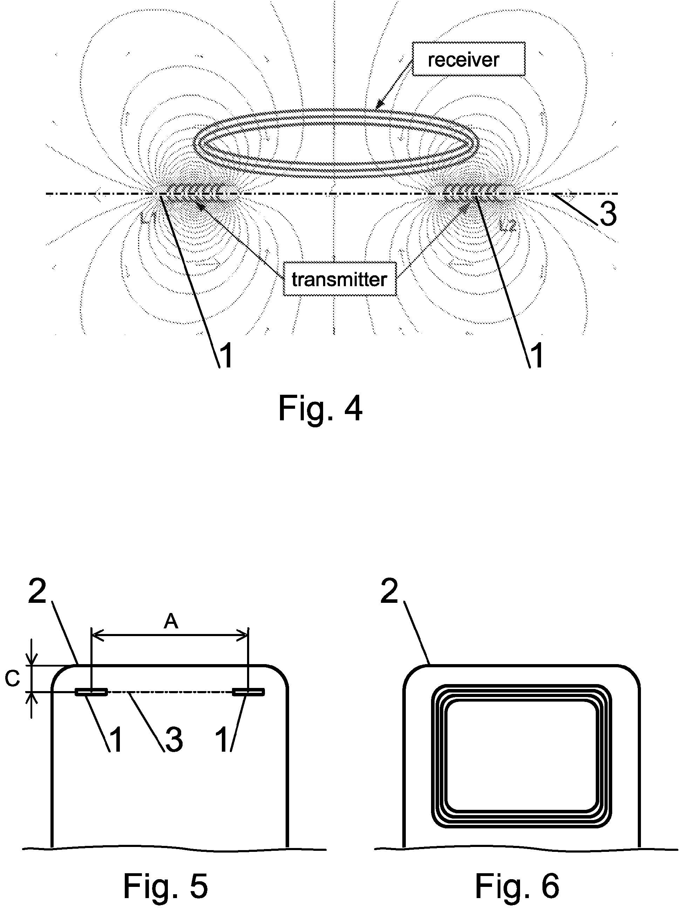

It is important that solenoid windings have their magnetic fields in the counter-phase, that solenoid windings are oriented inversely, in the opposite direction. This together with the sufficient axial distance creates a situation where the magnetic field on the outer edges of the antenna system has a shape and course which is very similar to that of the flat spiral antenna (figure 4). In the middle zone - at the level which is exactly in the axis of the two solenoid windings - the course of the magnetic field lines differs from the course of the field lines of the flat spiral antenna; the field lines are deformed into the direction of the axis of the solenoid windings, but the co-effecting antenna of the receiver never reaches the level of this axis during the approach. In the rising distance from the axis of the solenoid windings the course of the magnetic field lines is more shaped to the form known in the flat spiral antenna, where the magnetic field lines cross the plane with the flat spiral antenna of the receiver in the diagonal or perpendicular manner. The approach (approximation) of the antenna of the receiver to the axis of the solenoid windings is in practice limited by the thickness of the bodies of individual devices, for example by thickness of the mobile phone and so on. The shape of the magnetic field which we achieve by a pair of solenoid windings with the oppositely oriented magnetic fields which is sufficiently similar to a field produced by the typical flat spiral antenna, but a significant part of the surface necessary for the placement of the antenna is saved - or spared - at the same time.

Solenoid windings are preferably arranged in such a way that the plan of the flat spiral antenna of the receiver crosses the length of the solenoid windings, as depicted on the figure 4. During the inventing of the new antenna system cooperating with the common construction of the NFC antenna of the receiver it has shown to be preferable if the length of the solenoid windings is in the scope of 5 to 20 mm; that is, miniature windings are sufficient. The cross section of the solenoid windings can have any shape (circle, rectangle, square, ellipsis, and so on), but the surface of the cross section has to be chosen in such a way that the resulting value of the induction ranges from 750nH to 2µH, and the quality Q=15-25.

The distance between the middles of the solenoid windings is at least twice their length; preferably the distance between the middles is 35 to 45 mm. These dimensions are not just a result of routine, non-inventive action of the person skilled in the art during the dimensioning of the antenna system. The dimensions rather manifest the abovementioned relationship that the solenoid windings should be placed in such mutual distance that the magnetic field outpouring from the solenoid winding encircles the conductor of the flat spiral antenna of the receiver and runs around this conductor, whereby this flat spiral antenna is moved (approximated) to the plane of the solenoid windings. It is therefore important that the dimensional arrangement of the solenoid windings corresponds to the used and usually standardized dimensions of the antenna of the receiver. As has been mentioned in the prior state of the art, the receiving antenna of the circular shape usually has a diameter of approximately 40 mm, and in case of the rectangular shape its width is approximately 42 mm and its length is approximately 72 mm. The distance of the middles of the solenoid windings ranging from 35 to 45 mm therefore manifests the dimensional bond with the antenna of the receiver, which is otherwise independent, and which is part of the independent device.

Mutually coaxial arrangement of two solenoid windings according to this invention reminds one of NFC antenna according to publication US 2008/0238799 A1. This publication, however, describes and seeks different goal; it tries to create a possibility of directioning of the magnetic field in such a way that the magnetic field is weakened one half-space into the plane with the coils and strengthened in the half-space in the opposite direction. Therefore, the magnetic field from one side of the half-space can be theoretically directly energetically used on the other side of the plane. If this theoretical presupposition were actually realized, it would have caused the strengthening of the magnetic field on the side of the antenna of the receiver. In our case it is not defined in advance which side should the antenna of the receiver approach the pair of the solenoid windings from. The proposed invention - as opposed to publication US 2008/0238799 A1 - discloses a geometry of the distribution of the solenoid windings relative to the antenna of the receiver, as well as opposite orientation of the magnetic field in a pair of the solenoid windings, where other independent excitation elements serve this latter purpose. These are features which are necessary for the achievement of the stated goal that the pair of small solenoid windings emulates the radiation (emission) of a large surface of the spiral antenna.

The common axis of both solenoid windings is in the inner arrangement at least 3 to 5 mm from the edge of the device where the antenna system is placed.

Preferably the antenna system according to this invention is placed in the mobile communication device, for example in the mobile phone. Solenoid windings can be placed at the edge of the PCB, in case of the mobile phone in the corners of the PCB.

In order to achieve the opposite orientation of the magnetic field on the solenoid windings, these windings have independent excitation; in such case they are not connected in series or in parallel to a common excitation element.

With the goal to achieve the change of the depth of modulation of the transmitted signal it is advantageous if each solenoid winding L1, L2 is controlled by the excitation element with the end levels which operate in the bridge connection. Solenoid winding L1 will be excitated by A1, A3 and solenoid winding L2 will be excitated by A7, A8. Both excitation elements will operate with the same frequency 13,56 MHz and they will have common digital modulation signal on the MOD input. The end levels of the excitation element can be switched off by means of respective control inputs D1, D2, D3, D4, which are synchronized with the digital modulation signal on the MOD input.

New method of alteration (change) of the modulation depth during the transmission by means of the NFC platform lies in the fact that the intensity of the magnetic field is altered by switching the end levels of the excitation elements on and off in a rhythm of the required modulation. This is a very effective method mainly in comparison with the hitherto used method where the amplitude modulation is standardly realized through intentional insertion of the additional losses, usually by means of the resistance whose value changes in the rhythm of the modulation. The efficacy of such solution is low, however, and the loss of energy is unnecessary when compared to the solution with the switchable end levels according to this invention.

With antenna system with two solenoid windings L1, L2 it is possible to alter the modulation depth in four levels with 25% tiering according to the following scheme of the switching of the end levels of the excitation elements off (0) and on (1):

| **Inputs** | | | | **Modulation depth** |
|---|---|---|---|---|
| **D1** | **D2** | **D3** | **D4** | |
| 1 | 0 | 0 | 0 | 25% |
| 1 | 1 | 0 | 0 | 50% |
| 1 | 1 | 1 | 0 | 75% |
| 1 | 1 | 1 | 1 | 100% |

Antenna system according to this invention diminishes the surface necessary for the built-up area of the NFC antenna and it also allows effective alteration of the modulation depth.

The improved shape and course of the magnetic field and the increase of overall radiation performance is achieved if two or more pairs of the solenoid windings are used. In such arrangement it still holds that the solenoid windings of individual pairs have common axis and they have inversely oriented magnetic fields.

Optimal course of the magnetic field of the solenoid windings - as depicted in the figure 4 - is achieved in the vertical plane which runs through the axes of the solenoid windings. In other vertical planes which are partially rotated around the axis of the antenna of the receiver the course of the magnetic field is different. Use of the multiple pairs of the solenoid windings achieves the desired course in multiple planes. Increase in the number of pairs leads to better emulation of the magnetic field of the typical flat antenna; it will, however, be naturally limited by the available surface on the PCB. What is crucial is that the proposed invention achieves the desired effects even during the use of a single pair of the solenoid windings which can be advantageously and without complications placed on the PCB board, for example on its edges or in the corners.

In case of two-pair configuration the axis of one pair of the solenoid windings can be perpendicular on the axis of the second pair, whereby the middles of the solenoid windings are placed on the circle. Such geometry produces circular arrangement. In case of the quadrangular arrangement the axes of both pairs of the solenoid windings are parallel. The surface of the circle or quadrilateral - which is defined by the middles of the solenoid windings - should range from 1200 to 2000 mm². In cases of multiple-pair configurations the phase of individual levels (antennas) is adjusted in such a way that the resulting course of the signal induced in the antenna of the receiver is sinusoidal. Setting of the excitation elements can eliminate the dimensional and angular deviations from the main rules of the configuration according to this invention. These geometrical deviations are acceptable if required by the situation of the design of the PCB. Usually, the rectangular architecture is required for the PCB design, where the outer surfaces of individual elements on the board are parallel or perpendicular. The antenna system according to this invention can be suitably adjusted to these conditions.

The advantage of this invention is mainly a significant saving of the surface necessary on the printed circuit for the placement of an NFC antenna in comparison with the flat spiral antenna used according to particular recommendations of the respective standard. A received magnetic field is detected on the antenna of the receiver in way as if it were transmitted by the typical flat spiral antenna. The effective direction and control of the depth modulation without energy losses in the excitation elements is another advantage.

### Brief description of drawings

The invention is further disclosed by the figures 1 to 9. The particular depicted ratios of the dimensions of the solenoid windings as well as the course of the magnetic fields lines and examples of the mutual positions in cases of multi-pair configuration are for the illustration purposes only and cannot be interpreted as limiting the scope of protection.
Figure 1 is a schematic depiction of the magnetic field during inductive coupling between the transmitter and the receiver according to the state of the art where typical flat spiral antennas are used both on the side of the transmitter and the receiver.
Figure 2 is an antenna system with a single pair of the solenoid windings on the common longitudinal axis and with the distance A of the middles.
Figure 3 depicts the magnetic field in the vicinity of the solenoid winding; the number of threads is for illustration purposes only.
Figure 4 depicts the magnetic fields of the solenoid windings which have a similar course at the level of the antenna of the receiver as in the case of the typical flat spiral antenna from the figure 1.
Figure 5 is an example of the placement of a single pair of the solenoid windings at the edge of the NFC communication device.
Figure 6 presents a comparison with the previous figure; it depicts similar NFC device with the typical flat spiral antenna according to the state of the art.
Figure 7 is a scheme of the excitation elements with the independently controlled end levels A1, A3, A7, A8.
Figure 8 is an example of the placement of four solenoid windings in the circle.
Figure 9 is an example of the placement of four solenoid windings in the quadrilateral.

### Examples of realization

### Example 1

In this example according to figures 2, 3, 4 and 5 the antenna system has two solenoid windings 1 marked as L1 and L2. In this example the solenoid windings 1 are formed by the conductor wound up on the ferrite flat core and its length is 10 mm. The induction of the solenoid winding 1 is µH; its quality is 20.

Solenoid windings 1 are placed on the PCB of the mobile phone in such a way that they have a common longitudinal axis 3. Eventual deviations in the coaxiality caused by the common production irregularities when elements are mounted on the PCB do not influence the achieved results. The ends of solenoid windings 1 are distanced at 30 mm, which corresponds to 40 mm distance A of the middles. The axis 3 of the solenoid windings is basically parallel with the shorter edge of the mobile phone and its distance from the edge of the mobile phone is approximately 4 mm, which is depicted on the figure 5. When comparing the figure 5 with the typical NFC flat spiral antenna on the figure 6, it is instantly obvious that the surface space which is affected by the NFC build-up is saved.

Solenoid windings 1 in the form of the two miniature elements are more simply placed during the designing of the PCB of NFC device 2 than the flat spiral antenna.

Solenoid windings 1 are connected in the opposite direction so that their magnetic fields are in the counter-phase.

### Example 2

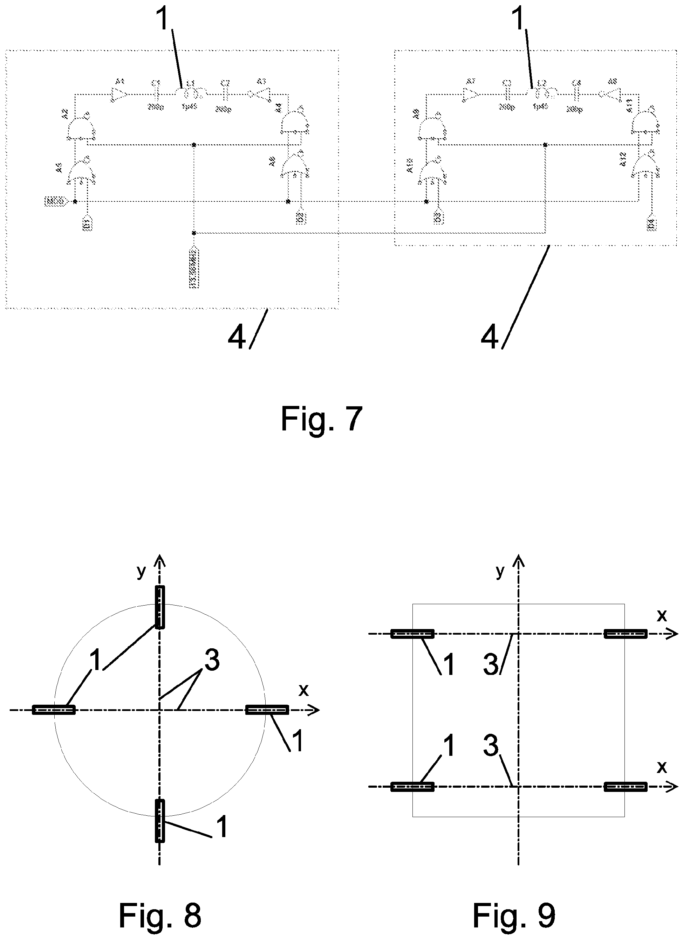

In this example the antenna system from the previous example has two independently controlled excitation elements 4 according to figure 7.

Each solenoid windings 1 L1, L2 is controlled by two end levels operating in the bridge connection. Switching of the end levels A1, A3, A7, A8 on and off during the modulation allows setting the depth modulation in range from 25% to 100% with a 25% step. During the switching off of the end levels there is not an unnecessary transformation of the energy in the resistances to heat.

### Example 3

In this example according to figure 8 the two pairs of the identical solenoid windings 1 are used; they are arranged in a circle in such a way that the middles of the solenoid windings 1 are on the circle and the axes 3 of the solenoid windings 1 are mutually perpendicular and their intersection is in the middle of the circle.

The diameter of the circle (within the margin of ±10 mm) corresponds to the dimensions of the antenna of the receiver.

### Example 4

In this example according to figure 9, two pairs of the solenoid windings 1 are used, which are arrange to the quadrilateral.

The middles of the solenoid windings 1 are on the opposite sides of the quadrilateral; the axes 3 of the solenoid windings 1 are mutually parallel.

### Industrial applicability

Industrial applicability is obvious. According to this invention it is possible to industrially and repeatedly compose and use NFC antenna system with small built-up space and it also possible to effectively alter the modulation depth.

### List of rotated symbols

- 1 -: solenoid winding
- 2 -: NFC device
- 3 -: axis of the pair of solenoid windings
- 4 -: excitation element

- L1 to LN -: winding 1 to N
- A -: distance of the middles of the solenoid windings
- C -: distance from the edge of the NFC device

- NFC -: near field communication
- PCB -: printed circuit board
- OOK -: On-off keying modulation
- AM -: amplitude modulation
- ISM -: industrial, scientific and medical radio bands ...

## Claims

1. An NFC antenna system with at least one pair of solenoid windings (1) whose length is larger than their diameter, and which are placed in a single plane, and which have a common longitudinal axis (3), and which are adapted to be connected to an excitation element (4),
**is characterized by the fact** that
the solenoid windings (1) of each pair are identical,
a distance (A) between middles of the solenoid windings (1) is at least twice their length,
and the solenoid windings (1) are oriented towards and adapted for connection to the excitation element (4) in such a way that their magnetic fields are mutually opposite.

2. The NFC antenna system according to the claim 1 is **characterized by the fact** that the distance between the solenoid windings (1) corresponds to dimensions of an antenna of a receiver; preferably a limit of error is a value of the length of one of the solenoid winding (1).

3. The NFC antenna system according to the claim 1 or 2 is **characterized by the fact** that each solenoid winding (1) has its own, independently controlled excitation element (4), whereby the excitation elements (4) have a modulation input connected and they have an identical excitation frequency.

4. The NFC antenna system according to any of the claims 1 to 3 is **characterized by the fact** that the length of the solenoid windings (1) ranges from 5 to 20 mm and the distance (A) between the middles of the solenoid windings (1) ranges from 35 to 45 mm.

5. The NFC antenna system according to any of the claims 1 to 4 is **characterized by the fact** that an induction of the solenoid windings (1) ranges from 750nH to 2µH and quality Q ranges from 15 to 25.

6. The NFC antenna system according to any of the claims 1 to 5 is **characterized by the fact** that each solenoid winding (1) L1, L2 is controlled by the excitation element (4) with two end levels, which are configured to operate in a bridge connection, preferably the end levels are independently controlled by control inputs for switching of the end levels of and on.

7. The NFC antenna system according to any of the claims 1 to 6 is **characterized by the fact** that the solenoid windings (1) have an air core or a ferrite core.

8. The NFC antenna system according to any of the claims 1 to 7 is **characterized by the fact** that it is placed in an NFC device (2), preferably in a mobile communication device, especially preferably in a mobile phone.

9. The NFC antenna system according to the claim 8 is **characterized by the fact** that the distance between the axis (3) and an edge of the NFC device (2) is at least 3 mm, preferably at least 5 mm.

10. The NFC antenna system according to any of the claims 1 to 9 is **characterized by the fact** that it has two pairs of the solenoid windings (1); the axis (3) of the first pair of the solenoid windings (1) is perpendicular to the axis (3) of the second pair of the solenoid windings (1), and the middles of the solenoid windings (1) are on a circle whose middle is in an intersection of the axes (3).

11. The NFC antenna system according to any of the claims 1 to 10 is **characterized by the fact** that it has two pairs of the solenoid windings (1); the axis (3) of the first pair of the solenoid windings (1) is parallel to the axis (3) of the second pair of the solenoid windings (1), and the middles of the solenoid windings (1) are on opposite sides of a quadrilateral.

12. The NFC antenna system according to the claim 10 or 11 is **characterized by the fact** that a surface of the circle or the quadrilateral defined by the middles of the solenoid windings (1) is between 1200 and 2000 mm².

13. A method of an alteration of a modulation depth during a transmission through the NFC antenna system according to any of the claims 6 to 12 is **characterized by the fact** that an intensity of the magnetic field and the modulation depth are altered by switching of the individual end levels of the excitation element (4) off and on in a rhythm of a required modulation.

14. The method of the alteration of the modulation depth during the transmission through the antenna system according to the claim 13 is **characterized by the fact** that the end levels of two excitation elements are switched off in four levels with 25% tiering by means of respective control inputs (D1, D2, D3, D4), which are synchronized with the digital modulation signal on the input.

## Patentansprüche

1. NFC-Antennensystem mit mindestens einem Paar der Zylinderspulen (1), deren Länge größer als ihr Durchmesser ist, und die in einer Ebene angeordnet sind, und die über eine identische Längsachse (3) verfügen, und die für den Anschluss an ein Erregerelement (4) hergerichtet sind,
**dadurch gekennzeichnet, dass**
die Zylinderspulen (1) eines jeden Paars identisch sind,
die Mittelpunkte der Zylinderspulen (1) voneinander in einem Abstand (A) mindestens im Doppelten ihrer Länge liegen,
und die Zylinderspulen (1) so ausgerichtet und für den Anschluss an ein Erregerelement (4) hergerichtet sind, dass ihre Magnetfelder einander entgegengesetzt sind.

2. NFC-Antennensystem gemäß Anspruch 1, **dadurch gekennzeichnet, dass** der Abstand der Zylinderspulen (1) den Abmessungen der Empfängerantenne entspricht, vorzugsweise mit einer Toleranz im Wert der Länge der Zylinderspule (1).

3. NFC-Antennensystem gemäß Anspruch 1 oder 2, **dadurch gekennzeichnet, dass** jede Zylinderspule (1) über eigenes, unabhängig gesteuertes Erregerelement (4) verfügt, wobei die Erregerelemente (4) einen gekoppelten Modulationseingang und übereinstimmende Erregerfrequenz haben.

4. NFC-Antennensystem gemäß einem der Ansprüche 1 bis 3, **dadurch gekennzeichnet, dass** die Länge der Zylinderspulen (1) in einem Bereich von 5 mm bis 20 mm liegt und die Mittelpunkte der Zylinderspulen (1) in einem Abstand (A) von 35 bis 45 mm liegen.

5. NFC-Antennensystem gemäß einem der Ansprüche 1 bis 4, **dadurch gekennzeichnet, dass** die Induktivität der Zylinderspulen (1) in einem Bereich von 750 nH bis 2 µH liegt und die Qualität Q in einem Bereich von 15 bis 25.

6. NFC-Antennensystem gemäß einem der Ansprüche 1 bis 5, **dadurch gekennzeichnet, dass** jede Zylinderspule (1) L1, L2 durch ein Erregerelement (4) mit zwei in Brückenschaltung arbeitenden Endstufen gesteuert wird, vorzugsweise sind die Endstufen unabhängig voneinander mittels Steuereingänge zum Aus- oder Einschalten der Endstufen gesteuert.

7. NFC-Antennensystem gemäß einem der Ansprüche 1 bis 6, **dadurch gekennzeichnet, dass** die Zylinderspulen (1) einen Luft- oder Ferritkern aufweisen.

8. NFC-Antennensystem gemäß einem der Ansprüche 1 bis 7, **dadurch gekennzeichnet, dass** es in einem NFC-Gerät (2), vorzugsweise in einem mobilen Kommunikationsgerät, besonders vorzugsweise in einem Mobiltelefon angeordnet ist.

9. NFC-Antennensystem gemäß Anspruch 8, **dadurch gekennzeichnet, dass** die Achse (3) vom Rand des NFC-Gerätes (2) mindestens in einem Abstand von 3 mm, vorzugsweise mindestens von 5 mm liegt.

10. NFC-Antennensystem gemäß einem der Ansprüche 1 bis 9, **dadurch gekennzeichnet, dass** es zwei Paare von Zylinderspulen (1) aufweist, die Achse (3) des ersten Paars der Zylinderspulen (1) senkrecht zur Achse (3) des zweiten Paares der Zylinderspulen (1) liegt und die Mittelpunkte der Zylinderspulen (1) sich auf einem Kreis befinden, dessen Mittelpunkt im Schnittpunkt der Achse (3) liegt.

11. NFC-Antennensystem gemäß einem der Ansprüche 1 bis 10, **dadurch gekennzeichnet, dass** es zwei Paare von Zylinderspulen (1) aufweist, die Achse (3) des ersten Paars der Zylinderspulen (1) waagerecht zur Achse (3) des zweiten Paares der Zylinderspulen (1) liegt und die Mittelpunkte der Zylinderspulen (1) sich auf gegenüberliegenden Seiten des Vierecks befinden.

12. NFC-Antennensystem gemäß Anspruch 10 oder 11, **dadurch gekennzeichnet, dass** die Fläche des Kreises oder Vierecks, das mit den Mittelpunkten der Zylinderspulen (1) umbeschrieben ist, eine Fläche von 1200 bis 2000 mm² aufweist.

13. Ein Verfahren zur Änderung der Modulationstiefe beim Senden über das NFC-Antennensystem gemäß einem der Ansprüche 6 bis 12, **dadurch gekennzeichnet, dass** die magnetische Feldstärke und die Modulationstiefe sich durch das Aus- und Einschalten von einzelnen Endstufen des Erregerelements (4) im Rhythmus der erforderlichen Modulation ändern.

14. Die Verfahren zur Änderung der Modulationstiefe beim Senden über das Antennensystem gemäß Anspruch 13, **dadurch gekennzeichnet, dass** die Endstufen von zwei Erregerelementen in vier Stufen mit 25%iger Abstufung über jeweilige mit digitalem Modulationssignal am Eingang synchronisierten Steuereingänge (D1, D2, D3, D4) abgeschaltet werden.

## Revendications

1. Un système d'antenne NFC avec au moins une paire d'enroulements solénoïdes (1) de longueur supérieure à leur diamètre, situés dans un même plan et ayant un même axe longitudinal (3) et étant adaptés à un élément d'excitation (4)
**caractérisé par le fait que**
les enroulements solénoïdes (1) de chaque paire sont identiques,
une distance (A) entre les centres des enroulements solénoïdes (1) est au moins le double de leur longueur,
et les enroulements de solénoïde (1) sont d'orientation déterminée et sont adaptés pour être connectés à l'élément d'excitation (4) de sorte que leurs champs magnétiques soient mutuellement opposés.

2. Le système d'antenne NFC selon la revendication 1 **caraetérisé par le fait** que la distance des enroulements solénoïdes (1) correspond aux dimensions de l'antenne du récepteur, de préférence avec une tolérance égale à la longueur de l'enroulement solénoïde (1).

3. Le système d'antenne NFC selon la revendication 1 ou 2 **caractérisé par le fait que** chaque enroulement solénoïde (1) a son propre élément d'excitation (4) commandé de manière indépendante tandis que les éléments d'excitation (4) ont une entrée de modulation interconnectée et ont la même fréquence d'excitation.

4. Le système d'antenne NFC selon quelconque des revendications 1 à 3 **caractérisé par le fait que** une longueur des enroulements solénoïdes (1) est comprise entre 5 mm et 20 mm et la distance (A) des centres des enroulements solénoïdes (1) est comprise entre 35 et 45 mm.

5. Le système d'antenne NFC selon quelconque des revendications 1 à 4, **caractérisé par le fait que** une induction des enroulements solénoïdes (1) est comprise entre 750nH et 2µH et la qualité Q est comprise entre 15 et 25.

6. Le système d'antenne NFC selon quelconque des revendications 1 à 5, **caractérisé par le fait que** chaque enroulement solénoïde (1) L1, L2 est commandé par un élément d'excitation (4) à deux niveaux finaux qui sont adaptés pour travailler en pont, et de préférence les niveaux finaux sont commandés individuellement par entrées de commande pour éteindre ou rallumer les niveaux finaux.

7. Le système d'antenne NFC selon quelconque des revendications 1 à 6 **caractérisé par le fait que** les enroulements solénoïdes (1) ont le noyau d'air et de ferrite.

8. Le système d'antenne NFC selon quelconque des revendications 1 à 7, **caractérisé par le fait qu'**il est placé dans un appareil NFC (2), de préférence dans un dispositif de communication mobile et de préférence particulière dans un téléphone portable.

9. Le système d'antenne NFC selon la revendication 8 **caractérisé par le fait que** la distance entre l'axe (3) et l'extrémité de l'appareil NFC (2) est au moins 3 mm, de préférence au moins 5 mm.

10. Le système d'antenne NFC selon quelconque des revendications 1 à 9, **caractérisé par le fait qu'**il a deux paires d'enroulements solénoïdes (1), l'axe (3) de la première paire d'enroulements solénoïdes (1) est perpendiculaire à l'axe (3) de la deuxième paire d' enroulement solénoïde (1) et les centres des enroulements solénoïdes (1) sont situés sur le cercle dont le centre est à l'intersection des axes (3).

11. Le système d'antenne NFC selon quelconque des revendications 1 à 10, **caractérisé par le fait qu'**il a deux paires d'enroulements solénoïdes (1), l'axe (3) de la première paire d'enroulements solénoïdes (1) est parallèle à l'axe (3) de la deuxième paire d' enroulement solénoïde (1) et les centres des enroulements solénoïdes (1) sont situés sur les côtés opposés du quadrilatère.

12. Le système d'antenne NFC selon la revendication 10 ou 11 **caractérisé par le fait que** la surface du cercle ou du quadrilatère circonscrit des centres des enroulements solénoïdes (1) est définie entre 1200 et 2000 mm².

13. Le mode de la modification du taux de modulation lors de la transmission par le système d'antenne NFC selon quelconque des revendications 6 à 12, **caractérisé par le fait que** l'intensité du champ magnétique et le taux de la modulation sont modifiés en éteignant et en rallumant les niveaux finaux de l'élément d'excitation (4) au rythme de la modulation requise

14. Le mode de la modification du taux de modulation lors de la transmission par le système d'antenne NFC selon la revendication 13 **caractérisé par le fait que** les niveaux finaux des deux éléments d'excitation sont désactivés sur quatre niveaux à gradation de 25 % par entrées de commande respectives (D1, D2, D3, D4) qui sont synchronisées à l'entrée par signal de modulation numérique.
